(19) Europäisches Patentamt / European Patent Office / Office européen des brevets

(11) **EP 4 541 771 A1**

(12) **EUROPEAN PATENT APPLICATION**
published in accordance with Art. 153(4) EPC

(43) Date of publication:
**23.04.2025  Bulletin 2025/17**

(21) Application number: **23823646.7**

(22) Date of filing: **24.05.2023**

(51) International Patent Classification (IPC):
***C01G 51/00*** (2025.01)      ***H01M 4/525*** (2010.01)

(52) Cooperative Patent Classification (CPC):
**C01G 51/00; H01M 4/525**

(86) International application number:
**PCT/JP2023/019354**

(87) International publication number:
**WO 2023/243347 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022  JP 2022098112**
**28.11.2022  JP 2022189389**
**18.05.2023  JP 2023082157**

(71) Applicant: **Nippon Chemical Industrial Co., Ltd.**
**Tokyo 136-8515 (JP)**

(72) Inventors:
• **TAKAHASHI, Chihiro**
  **Tokyo 136-8515 (JP)**
• **KIKUCHI, Masahiro**
  **Tokyo 136-8515 (JP)**

(74) Representative: **Page White Farrer**
**Bedford House**
**21a John Street**
**London WC1N 2BF (GB)**

(54) **LITHIUM-COBALT-BASED COMPOSITE OXIDE PARTICLES AND METHOD FOR PRODUCING SAME, AND LITHIUM-COBALT-BASED COMPOSITE OXIDE PARTICLE COMPOSITION AND METHOD FOR PRODUCING SAME**

(57)     Disclosed herein are lithium-cobalt-based composite oxide particles obtained by a solid-phase process and capable of reducing the weight and thickness of a positive electrode material when used as a positive electrode active material for non-aqueous lithium secondary batteries or all-solid-state batteries and a method for producing the same. The lithium-cobalt-based composite oxide particles are formed of a lithium-cobalt-based composite oxide having an average primary particle diameter of 0.50 μm or less and show a weight loss on heating at 850°C of 1.5 mass% or less.

Fig. 1

EP 4 541 771 A1

**Description**

Technical Field

The present invention relates to lithium-cobalt-based composite oxide particles useful as a positive electrode material for non-aqueous lithium secondary batteries, all-solid-state batteries, and the like, a lithium-cobalt-based composite oxide particle composition, and methods for producing the same.

Background Art

Non-aqueous lithium secondary batteries are used as power sources for mobile devices, notebook-type personal computers, electric cars, industrial robots, and the like. Further, instead of non-aqueous lithium secondary batteries using an electrolyte containing a flammable organic solvent, all-solid-state batteries using a safer solid electrolyte have actively been developed in recent years.

Recently, these non-aqueous lithium secondary batteries and all-solid-state batteries are required to have a lighter weight and a smaller thickness depending on their intended uses. In order to reduce the weight and thickness of a battery, members constituting the battery need to be made smaller in size. For example, reducing the size of a positive electrode material is one of factors to reduce the weight and thickness of a battery.

As for reducing the size of a positive electrode material, for example, Patent Literature 1 discloses an electrode member including a thin-film-shaped positive electrode active material layer formed of fine particles of an oxide-based positive electrode active material that contains 0.5 vol% or more of particles whose 10% particle diameter ($D_{10}$) and 50% particle diameter ($D_{50}$) in a volume-based cumulative particle size distribution are respectively 0.01 $\mu$m to 0.5 $\mu$m and 0.01 $\mu$m to 1.0 $\mu$m and whose particle diameter is 0.12 $\mu$m or less. In Patent Literature 1, there is no specific description about a production method to obtain the positive electrode active material, but Patent Literature 1 indicates that the thickness of an electrode member can be reduced by using a nano-level positive electrode active material.

As for obtaining a nano-level lithium-based composite oxide as a positive electrode active material, Patent literature 2 discloses that a nano-level lithium-based composite oxide is synthesized using a molten salt as a reactant and a reaction medium through a process including a drying step. Patent Literature 2 describes that as compared to conventional larger materials, such a nano-level lithium-based composite oxide makes it possible to achieve higher functions and develop new functions and to aim at reducing the size of an electronic device.

Citation List

Patent Literature

Patent Literature 1
Japanese Patent Laid-Open No. 2019-220468
Patent Literature 2
Japanese Patent Laid-Open No. 2008-105912

Summary of Invention

Technical Problem

The method disclosed in Patent Literature 2 utilizes the fact that metal ions as a raw material are present in a completely dissociated state in a molten salt and are therefore present in a state where they are mixed at the ion level, which makes it easy to form a stable material by chemical thermodynamic equilibrium even when heat treatment is performed at a relatively low temperature.

However, a lithium-cobalt-based composite oxide is usually obtained by a so-called solid-phase process in which a plurality of raw material powders are mixed and fired, and a high firing temperature is required to sufficiently react the raw material powders. This progresses crystallization, but at the same time, grain growth occurs so that lithium-cobalt-based composite oxide particles have a large particle diameter, which, as a result, makes it difficult to reduce the weight and thickness of a positive electrode material.

It is therefore an object of the present invention to provide lithium-cobalt-based composite oxide particles obtained by a solid-phase process and capable of reducing the weight and thickness of a positive electrode material when used as a positive electrode active material for a non-aqueous lithium secondary battery or an all-solid-state battery and a method for producing the same.

Solution to Problem

In light of such circumstances, the present inventors have intensively studied and, as a result, have found that the use of a raw material using nano-level fine particles as a cobalt source allows a reaction with a lithium source to readily proceed so that crystallization well proceeds even by low-temperature firing. This finding has led to the completion of the present invention.

Specifically, the present invention (1) provides lithium-cobalt-based composite oxide particles formed of a lithium-cobalt-based composite oxide having an average primary particle diameter of 0.50 $\mu$m or less, the lithium-cobalt-based composite oxide particles showing a weight loss on heating at 850°C of 1.5 mass% or less.

The present invention (2) provides the lithium-cobalt-based composite oxide particles according to (1), which have a BET specific surface area of 2.0 $m^2$/g or more.

The present invention (3) provides the lithium-cobalt-based composite oxide particles according to (1) or (2), wherein the lithium-cobalt-based composite oxide has an average secondary particle diameter of 0.10 to 2.00 $\mu$m.

The present invention (4) provides the lithium-cobalt-based composite oxide particles according to any one of (1) to (3), wherein in X-ray diffraction analysis, an impurity phase other than a hexagonal crystal phase (R-3m) derived from the lithium-cobalt-based composite oxide does not appear.

The present invention (5) provides the lithium-cobalt-based composite oxide particles according to any one of (1) to (4), which are obtained by a solid-phase process.

The present invention (6) provides a method for producing lithium-cobalt-based composite oxide particles, the method including:

a raw material mixture preparing step in which a raw material mixture containing at least a cobalt compound having an average secondary particle diameter of 0.10 to 0.50 $\mu$m and a first lithium compound is prepared; and
a final firing step in which the raw material mixture is fired at 500 to 850°C.

The present invention (7) provides the method for producing lithium-cobalt-based composite oxide particles according to (6), wherein the cobalt compound is at least one selected from among a hydroxide, an oxide, a carbonate, an oxyhydroxide, a nitrate, a sulfate, and an organic acid salt of first cobalt.

The present invention (8) provides the method for producing lithium-cobalt-based composite oxide particles according to (6) or (7), wherein the lithium compound is at least one selected from among a carbonate, a hydroxide, an acetate, and a nitrate of lithium.

The present invention (9) provides the method for producing lithium-cobalt-based composite oxide particles according to any one of (6) to (8), wherein, between the raw material mixture preparing step and the final firing step, a preliminary firing step is performed in which the raw material mixture is preliminarily fired at 200°C or higher and lower than 500°C.

The present invention (10) provides the method for producing lithium-cobalt-based composite oxide particles according to (9), wherein the final firing step is performed after a preliminarily fired product is cooled after the preliminary firing step.

The present invention (11) provides the method for producing lithium-cobalt-based composite oxide particles according to (9), wherein the final firing step is performed without cooling a preliminarily fired product after the preliminary firing step.

The present invention (12) provides the method for producing lithium-cobalt-based composite oxide particles according to any one of (6) to (11), wherein after the final firing step, a fired product pulverizing treatment step is performed in which lithium-cobalt-based composite oxide particles obtained by performing the final firing step are subjected to pulverizing treatment.

The present invention (13) provides the method for producing lithium-cobalt-based composite oxide particles according to (12), wherein in the fired product pulverizing treatment step, the lithium-cobalt-based composite oxide particles are pulverized by jet pulverization.

The present invention (14) provides a lithium-cobalt-based composite oxide particle composition containing the lithium-cobalt-based composite oxide particles according to any one of (1) to (5) and a second lithium compound.

The present invention (15) provides a method for producing a lithium-cobalt-based composite oxide particle composition, the method including a mixing step in which lithium-cobalt-based composite oxide particles obtained by performing the method for producing lithium-cobalt-based composite oxide particles according to any one of (6) to (13) and a second lithium compound are mixed or mixed and pulverized.

The present invention (16) provides the method for producing a lithium-cobalt-based composite oxide particle composition according to (15), wherein the second lithium compound is at least one selected from among lithium carbonate, lithium hydroxide, and lithium nitrate.

The present invention (17) provides the method for producing a lithium-cobalt-based composite oxide particle composition according to (15) or (16), wherein the second lithium compound has an average primary particle diameter of 0.10 μm to 100.0 μm.

The present invention (18) provides the method for producing a lithium-cobalt-based composite oxide particle composition according to (15), wherein the second lithium compound is lithium carbonate having an average primary particle diameter of 0.10 to 10.0 μm.

The present invention (19) provides the method for producing a lithium-cobalt-based composite oxide particle composition according to any one of (15) to (18), wherein in the mixing step, the second lithium compound and the lithium-cobalt-based composite oxide particles are mixed so that a content of the second lithium compound in terms of lithium atom content is 0.01 to 10.0 mass% relative to a mass of the lithium-cobalt-based composite oxide particles.

The present invention (20) provides the method for producing a lithium-cobalt-based composite oxide particle composition according to any one of (15) to (19), wherein in the mixing step, mixing treatment or mixing and pulverizing treatment is performed in a dry or wet manner.

Advantageous Effects of Invention

The present invention makes it possible to provide lithium-cobalt-based composite oxide particles obtained by a solid-phase process and capable of reducing the weight and thickness of a positive electrode material when used as a positive electrode active material for a non-aqueous lithium secondary battery or an all-solid-state battery, a lithium-cobalt-based composite oxide particle composition, and methods for producing the same.

Brief Description of Drawings

[Figure 1] Figure 1 is an X-ray diffraction chart of lithium-cobalt composite oxide particles obtained in Examples 1 to 6 and Comparative Example 1.
[Figure 2] Figure 2 is an X-ray diffraction chart of lithium-cobalt composite oxide particles obtained in Examples 7 to 10 and Comparative Example 2.
[Figure 3] Figure 3 is an X-ray diffraction chart of lithium-cobalt composite oxide particles obtained in Comparative Examples 3 to 8.
[Figure 4] Figure 4 is an X-ray diffraction chart of lithium-cobalt composite oxide particles obtained in Examples 11 to 13 and Comparative Example 9.
[Figure 5] Figure 5 is an X-ray diffraction chart of lithium-cobalt composite oxide particles obtained in Examples 14 to 17.

Description of Embodiments

Lithium-cobalt-based composite oxide particles of the present invention are formed of a lithium-cobalt-based composite oxide having an average primary particle diameter of 0.50 μm or less,
the lithium-cobalt-based composite oxide particles showing a weight loss on heating at 850°C of 1.5 mass% or less.

The lithium-cobalt-based composite oxide particles of the present invention are constituted from primary particles of the lithium-cobalt-based composite oxide, secondary particles as aggregates of primary particles of the lithium-cobalt-based composite oxide, or a mixture of primary particles and secondary particles of the lithium-cobalt-based composite oxide. The lithium-cobalt-based composite oxide particles of the present invention are lithium-cobalt-based composite oxide particles obtained by a solid-phase process.

The lithium-cobalt-based composite oxide forming the lithium-cobalt-based composite oxide particles of the present invention is a composite oxide containing at least lithium and cobalt.

The atomic mole ratio of Li to Co (Li/Co) in the lithium-cobalt-based composite oxide particles of the present invention is preferably 0.90 to 1.20, particularly preferably 0.95 to 1.15. When the atomic mole ratio of Li to Co (Li/Co) in the lithium-cobalt-based composite oxide particles is within the above range, the energy density of a positive electrode active material is increased.

The lithium-cobalt-based composite oxide particles of the present invention may optionally contain an M element for the purpose of improving performance or physical properties. The M element is one or more metallic elements selected from among Mg, Al, Ti, Zr, Cu, Fe, Sr, Ca, V, Mo, Bi, Nb, Si, Zn, Ga, Ge, Sn, Ba, W, Na, K, Ni, and Mn.

The atomic mole percentage of the M element to Co ((M/Co) × 100) in the lithium-cobalt-based composite oxide particles of the present invention is preferably 0.01 to 5.00 mol%, particularly preferably 0.05 to 2.00 mol%. When the lithium-cobalt-based composite oxide particles contain the M element and the atomic mole percentage of the M element to Co ((M/Co) × 100) in the lithium-cobalt-based composite oxide particles is within the above range, battery characteristics can be improved without impairing a charge-discharge capacity. It should be noted that when the lithium-cobalt-based composite oxide contains two or more M elements, the number of atomic moles of the M element as a base for calculating the mole percentage refers to the sum of the numbers of atomic moles of the respective M elements.

When the lithium-cobalt-based composite oxide particles of the present invention contain the M element, the M element may be present inside the lithium-cobalt-based composite oxide particles, or may be present on the surfaces of the lithium-cobalt-based composite oxide particles, or may be present both inside and on the surfaces of the lithium-cobalt-based composite oxide particles.

When the M element is present on the surfaces of the lithium-cobalt-based composite oxide particles of the present invention, the M element may be present in the form of an oxide, a composite oxide, a sulfate, a phosphate, or the like.

The average particle diameter of primary particles of the lithium-cobalt-based composite oxide in the lithium-cobalt-based composite oxide particles of the present invention is 0.50 $\mu$m or less, preferably 0.10 to 0.40 $\mu$m. The lithium-cobalt-based composite oxide particles of the present invention are obtained by firing at a lower temperature of 500 to 850°C than ever before, and therefore their average primary particle diameter is small. When the average primary particle diameter of the lithium-cobalt-based composite oxide is within the above range, the weight and thickness of a positive electrode material can be reduced when the lithium-cobalt-based composite oxide particles of the present invention are used as a positive electrode active material for a non-aqueous lithium secondary battery or an all-solid-state battery. On the other hand, if the average primary particle diameter of the lithium-cobalt-based composite oxide exceeds the above range, a positive electrode active material contains many coarse particles, which makes it difficult to reduce the thickness of a positive electrode.

It should be noted that in the present invention, the average primary particle diameter of the lithium-cobalt-based composite oxide particles is determined from a photograph taken by a scanning electron microscope (SEM). Specifically, 100 primary particles were randomly selected under observation with a scanning electron microscope (SEM), the horizontal Feret's diameter of each of the particles was measured, and the average of horizontal Feret's diameters of the 100 particles was determined as an average primary particle diameter.

The weight loss on heating at 850°C of the lithium-cobalt-based composite oxide particles of the present invention is 1.5 mass% or less, preferably 1.0 mass% or less, particularly preferably 0.5 mass% or less. When lithium-cobalt-based composite oxide particles are produced, grain growth during firing can be suppressed by lowering a firing temperature, but if the firing temperature is excessively lowered to attempt to suppress grain growth too much, raw materials do not sufficiently react. Further, if lithium-cobalt-based composite oxide particles obtained by such a poor reaction between raw materials are used, not only does a problem occur due to unreacted raw materials during production of a positive electrode material but also a charge-discharge capacity expected of the lithium-cobalt-based composite oxide is reduced. On the other hand, the lithium-cobalt-based composite oxide particles of the present invention are produced using a raw material mixture containing a cobalt source having a small particle diameter to increase the reactivity of raw materials during firing. Therefore, the reaction sufficiently proceeds, and the weight loss is 1.5 mass% or less, preferably 1.0 mass% or less, particularly preferably 0.5 mass% or less, which makes it possible to prevent the occurrence of a problem during production of a positive electrode material and a reduction in charge-discharge capacity expected of the lithium-cobalt-based composite oxide.

It should be noted that in the present invention, the weight loss on heating at 850°C is calculated by the following formula.

$$\texttt{Weight loss (\%) = ((X - Y) / X) × 100}$$

X represents the mass (g) of lithium-cobalt-based composite oxide particles before heating at 850°C.

Y represents the mass (g) of lithium-cobalt-based composite oxide particles heated to 850°C at a temperature rise rate of 100°C/h, maintained at 850°C for 5 hours after reaching 850°C, and then naturally cooled to room temperature.

The BET specific surface area of the lithium-cobalt-based composite oxide particles of the present invention is preferably 2.0 m²/g or more, particularly preferably 3.0 to 15.0 m²/g. When the BET specific surface area of the lithium-cobalt-based composite oxide particles is within the above range, the weight and thickness of a positive electrode material can easily be reduced, which makes it easy to reduce the size of a battery.

The average particle diameter of secondary particles of the lithium-cobalt-based composite oxide in the lithium-cobalt-based composite oxide particles of the present invention is preferably 0.10 to 2.00 $\mu$m, particularly preferably 0.20 to 1.00 $\mu$m. When the average secondary particle diameter of the lithium-cobalt-based composite oxide particles is within the above range, the weight and thickness of a positive electrode material can easily be reduced, which makes it easy to reduce the size of a battery. On the other hand, if the average secondary particle diameter of the lithium-cobalt-based composite oxide particles is less than the above range, not only are the resultant positive electrode active material particles difficult to handle as a powder but also there is a high possibility that a problem will occur during production of a positive electrode material. Further, if the average secondary particle diameter of the lithium-cobalt-based composite oxide particles exceeds the above range, the resultant positive electrode active material particles become coarse, which makes it difficult to reduce the thickness of a positive electrode. It should be noted that in the present invention, the average secondary particle diameter of the lithium-cobalt composite oxide particles refers to a volume-based 50% particle diameter (D50) measured by laser diffraction/scattering using water as a measurement solvent.

It is preferred that when the lithium-cobalt-based composite oxide particles of the present invention are subjected to X-ray diffraction analysis using CuKα rays as a radiation source, an impurity phase other than a hexagonal crystal phase (R-3m) derived from the lithium-cobalt-based composite oxide does not appear. The hexagonal crystal phase (R-3m) derived from the lithium-cobalt-based composite oxide refers to diffraction peaks resulting from $LiCoO_2$ observed at 2θ = about 18.9° (18.9 ± 0.2°), about 37.4° (37.4 ± 0.2°), about 38.4° (38.4 ± 0.2°), about 39.1° (39.1 ± 0.2°), about 45.3° (45.3 ± 0.2°), about 49.5° (49.5 ± 0.2°), about 59.6° (59.6 ± 0.2°), about 65.5° (65.5 ± 0.2°), about 66.4° (66.4 ± 0.2°), and about 69.8° (69.8 ± 0.2°). The impurity phase refers to diffraction peaks other than the diffraction peaks resulting from $LiCoO_2$. Specific examples of such an impurity phase include cobalt oxide ($Co_3O_4$) having a main peak at about 36.8° (36.8 ± 0.2°), lithium carbonate ($Li_2CO_3$) having a main peak at about 31.8° (31.8 ± 0.2°), and a cubic lithium-cobalt-based composite oxide (cubic $LiCoO_2$) having a main peak at about 19.2° (19.2 ± 0.2°).

The lithium-cobalt-based composite oxide particles of the present invention are suitably used as a positive electrode active material for lithium secondary batteries, all-solid-state batteries, and the like.

A method for producing the lithium-cobalt-based composite oxide particles of the present invention is not limited, but the lithium-cobalt-based composite oxide particles are appropriately produced by a method for producing lithium-cobalt-based composite oxide particles of the present invention described below.

The method for producing lithium-cobalt-based composite oxide particles of the present invention includes:

a raw material mixture preparing step in which a raw material mixture containing at least a cobalt compound having an average secondary particle diameter of 0.10 to 0.50 μm and a first lithium compound is prepared; and
a final firing step in which the raw material mixture is fired at 500 to 850°C.

The raw material mixture preparing step in the method for producing lithium-cobalt-based composite oxide particles of the present invention is a step in which a raw material mixture containing at least a cobalt compound and a first lithium compound is prepared.

The cobalt compound is not limited as long as it is a cobalt compound used as a raw material for producing a lithium-cobalt-based composite oxide, and examples thereof include an oxide, an oxyhydroxide, a hydroxide, a carbonate, a nitrate, a sulfate, and an organic acid salt of cobalt.

The average secondary particle diameter of the cobalt compound in the raw material mixture prepared in the raw material mixture preparing step is preferably 0.10 μm to 0.50 μm, particularly preferably 0.10 to 0.30 μm. When the average secondary particle diameter of the cobalt compound is within the above range, it is possible to obtain lithium-cobalt-based composite oxide particles formed of a lithium-cobalt-based composite oxide whose average primary particle diameter is 0.50 μm or less, preferably 0.10 to 0.40 μm.

The first lithium compound used in the raw material mixture preparing step is not limited as long as it is a lithium compound used as a raw material for producing a lithium-cobalt-based composite oxide, and examples thereof include an oxide, a hydroxide, a carbonate, a nitrate, a sulfate, and an organic acid salt of lithium.

The average particle diameter of the first lithium compound used in the raw material mixture preparing step is not limited, and the first lithium compound may be commercially-available one. For example, one having a particle diameter in the range of 10 to 100 μm is commercially available.

In the raw material mixture preparing step, the content ratio between the first lithium compound and the cobalt compound in the raw material mixture is set so that the ratio of the number of atomic moles of Li to the number of atomic moles of Co (Li/Co mole ratio) is preferably 0.90 to 1.20, particularly preferably 0.95 to 1.15. When the content ratio between the first lithium compound and the cobalt compound in the raw material mixture is within the above range, a lithium-cobalt-based composite oxide having a single phase is likely to be obtained.

In the raw material mixture preparing step, the raw material mixture may optionally contain a compound containing an M element. Examples of the compound containing an M element include an oxide, a hydroxide, a carbonate, a nitrate, a sulfate, a fluoride, and an organic acid salt which contain an M element. The compound containing an M element may be a compound containing two or more M elements. Examples of the M element include Mg, Al, Ti, Zr, Cu, Fe, Sr, Ca, V, Mo, Bi, Nb, Si, Zn, Ga, Ge, Sn, Ba, W, Na, K, Ni, and Mn.

It should be noted that the first lithium compound, the cobalt compound, and the compound containing an M element as raw materials are not limited by their production history, but their impurity contents are preferably as low as possible to produce high-purity lithium-cobalt-based composite oxide particles.

In the raw material mixture preparing step, the first lithium compound, the cobalt compound, and the M element-containing compound optionally used are mixed to prepare a raw material mixture. At this time, the cobalt compound is allowed to be present so that the average secondary particle diameter of the cobalt compound in the raw material mixture is preferably 0.10 to 0.50 $\mu$m, particularly preferably 0.10 to 0.30 $\mu$m, and the first lithium compound and the M element-containing compound optionally used are mixed by treatment such as stirring or pulverization. Such mixing makes it easy to bring the first lithium compound, the cobalt compound, and the M element-containing compound optionally used into contact with each other. When the average secondary particle diameter of the cobalt compound in the raw material mixture is within the above range, the reactivity of raw materials in the final firing step can be increased, and therefore the reaction sufficiently proceeds even when the raw material mixture is fired at a low temperature of 500 to 850°C. This makes it possible to obtain, through the final firing step, lithium-cobalt-based composite oxide particles whose weight loss on heating at 850°C is 1.5 mass% or less, preferably 1.0 mass% or less, particularly preferably 0.5 mass% or less. A method for mixing the first lithium compound, the cobalt compound, and the M element-containing compound optionally used may either be dry or wet.

A method for preparing the raw material mixture is not limited, and examples thereof include: a method (i) in which the cobalt compound is subjected to pulverizing treatment to adjust its particle diameter before the cobalt compound, the first lithium compound, and the M element-containing compound optionally used are mixed, and then the cobalt compound subjected to pulverizing treatment, the first lithium compound, and the M element-containing compound optionally used are mixed; a method (ii) in which the cobalt compound is subjected to pulverizing treatment and the first lithium compound and/or the M element-containing compound are/is subjected to pulverizing treatment before the cobalt compound, the first lithium compound, and the M element-containing compound optionally used are mixed, and then the cobalt compound, the first lithium compound, and the M element-containing compound optionally used subjected to pulverizing treatment are mixed; and a method (iii) in which the cobalt compound, the first lithium compound, and the M element-containing compound optionally used are mixed and the resultant is subjected to mixing and pulverizing treatment. The pulverizing treatment of the cobalt compound, the first lithium compound, or the M element-containing compound and the mixing and pulverizing treatment of the cobalt compound, the first lithium compound, and the M element-containing compound optionally used may either be dry or wet.

When cobalt hydroxide is used as a cobalt compound in the raw material mixture preparing step, the raw material mixture may be prepared by, for example, a method in which cobalt hydroxide, the first lithium compound, and the M element-containing compound optionally used are subjected to mixing and pulverizing treatment to prepare a raw material mixture whose average secondary particle diameter of cobalt hydroxide is 0.10 to 0.50 $\mu$m, particularly preferably 0.10 to 0.30 $\mu$m. Generally, single particles of cobalt hydroxide have a small particle diameter, and therefore even when cobalt hydroxide is not previously subjected to pulverizing treatment to adjust its particle diameter to be smaller, a raw material mixture having an average particle diameter within the above range can be obtained by subjecting cobalt hydroxide to mixing and pulverizing treatment together with the first lithium compound and the M element-containing compound optionally used.

Examples of a device for performing dry pulverizing treatment or mixing and pulverizing treatment include a jet mill, a pin mill, a roll mill, a ball mill, and a bead mill. Examples of a device for performing wet pulverizing treatment or mixing and pulverizing treatment include a ball mill and a bead mill.

When prepared by a wet method, the raw material mixture is preferably dried. As a drying method, an ordinary method is used. When wet pulverizing treatment is performed, for example, a method using a spray drier can be used.

The final firing step is a step in which a raw material mixture obtained by performing the raw material mixture preparing step is fired to obtain lithium-cobalt-based composite oxide particles.

A firing temperature in the final firing step is 500 to 850°C, preferably 550 to 830°C. When the firing temperature in the final firing step is within the above range, it is possible to obtain lithium-cobalt-based composite oxide particles whose average primary particle diameter is 0.50 $\mu$m or less, preferably 0.10 to 0.40 $\mu$m and whose weight loss on heating at 850°C is 1.5 mass% or less, preferably 1.0 mass% or less, particularly preferably 0.5 mass% or less. On the other hand, if the firing temperature in the final firing step is less than the above range, it is not possible to obtain lithium-cobalt-based composite oxide particles whose weight loss on heating at 850°C is 1.5 mass% or less, and if the firing temperature in the final firing step exceeds the above range, the average primary particle diameter of the lithium-cobalt-based composite oxide particles exceeds 0.50 $\mu$m.

Further, it is particularly preferred that the firing temperature in the final firing step is 500 to 850°C, preferably 550 to 830°C from the viewpoint of obtaining lithium-cobalt-based composite oxide particles whose average primary particle diameter is 0.50 $\mu$m or less, preferably 0.10 to 0.40 $\mu$m and weight loss on heating at 850°C is 1.5 mass% or less and which does not have an impurity phase other than a hexagonal crystal phase (R-3m) derived from the lithium-cobalt-based composite oxide.

A firing time in the final firing step is 1 to 30 hours, preferably 5 to 20 hours. A firing atmosphere in the final firing step is an oxidative atmosphere such as air or oxygen gas. In the final firing step, a fired product obtained by first firing may be fired more than once, if necessary.

In the method for producing lithium-cobalt-based composite oxide particles of the present invention, a preliminary firing step, in which a raw material mixture obtained by performing the raw material mixture preparing step is preliminarily fired at 200°C or higher and lower than 500°C, may optionally be performed between the raw material mixture preparing step and the final firing step for the purpose of efficiently removing a decomposition gas generated from the raw material mixture. By performing the preliminary firing step, it is possible to easily obtain the effect of allowing the reaction in the final firing step to proceed more uniformly. A preliminary firing temperature in the preliminary firing step is 200°C or higher and lower than 500°C, preferably 200 to 400°C, more preferably 250 to 350°C. A preliminary firing time in the preliminary firing step is 1 to 10 hours, preferably 2 to 5 hours.

In the method for producing lithium-cobalt-based composite oxide particles of the present invention, the final firing step can be performed after a preliminarily fired product obtained by performing the preliminary firing step is cooled to around room temperature (25°C) and optionally subjected to treatment such as pulverization or remixing after the preliminary firing step (hereinafter referred to as "method (A1)").

Alternatively, in the method for producing lithium-cobalt-based composite oxide particles of the present invention, the final firing step can be performed without cooling a preliminarily fired product obtained by performing the preliminary firing step after the preliminary firing step (hereinafter referred to as "method (A2)"). For example, in the case of the method (A2), a raw material mixture obtained by performing the raw material mixture preparing step is heated at a predetermined preliminary firing temperature for a predetermined preliminary firing time, and then the final firing step is continuously performed by increasing the heating temperature of the preliminarily fired product to a predetermined final firing temperature.

In the method for producing lithium-cobalt-based composite oxide particles of the present invention described above as the method (A1), the final firing step can be performed at a lower temperature than in the method (A2). Further, since the preliminarily fired product is cooled to around room temperature after the preliminary firing step, treatment such as pulverization or remixing can be performed, which makes it possible to obtain more uniform lithium-cobalt-based composite oxide particles.

Further, the process of the method for producing lithium-cobalt-based composite oxide particles of the present invention can be simplified by using the method (A2) than by using the method (A1).

Which of the method (A1) and the method (A2) is used can appropriately be selected in consideration of production equipment and/or industrial advantages.

In the method for producing lithium-cobalt-based composite oxide particles of the present invention, a fired product pulverizing treatment step, in which lithium-cobalt-based composite oxide particles obtained by performing the final firing step are subjected to pulverizing treatment, may optionally be performed after the final firing step.

The pulverizing treatment in the fired product pulverizing treatment step may either be dry pulverizing treatment or wet pulverizing treatment. Examples of a wet pulverizing device include a ball mill and a bead mill. Examples of a dry pulverizing device include publicly-known pulverizing devices such as a jet mill, a pin mill, a roll mill, a ball mill, and a bead mill.

Lithium-cobalt-based composite oxide particles obtained by performing the method for producing lithium-cobalt-based composite oxide particles of the present invention in such a manner as described above have an average primary particle diameter of 0.50 $\mu$m or less, preferably 0.10 to 0.40 $\mu$m and show a weight loss on heating at 850°C of 1.5 mass% or less, preferably 1.0 mass% or less, particularly preferably 0.5 mass% or less, which makes it easy to reduce the weight and thickness of a positive electrode material, thereby easily reducing the size of a battery. Further, lithium-cobalt-based composite oxide particles obtained by performing the method for producing lithium-cobalt-based composite oxide particles of the present invention have a BET specific surface area of preferably 2.0 m$^2$/g or more, particularly preferably 3.0 to 15.0 m$^2$/g and have an average secondary particle diameter of preferably 0.1 to 2.0 $\mu$m, particularly preferably 0.2 to 1.0 $\mu$m. When the BET specific surface area and/or the average secondary particle diameter of lithium-cobalt-based composite oxide particles obtained by performing the method for producing lithium-cobalt-based composite oxide particles of the present invention are/is in their/its above ranges/range, the effect of easily reducing the weight and thickness of a positive electrode material is enhanced.

A lithium-cobalt-based composite oxide particle composition of the present invention contains the lithium-cobalt-based composite oxide particles of the present invention and a second lithium compound.

The lithium-cobalt-based composite oxide particles of the present invention can further contain a second lithium compound to further improve sinterability so that a lithium-cobalt-based composite oxide particle composition is formed which contains the lithium-cobalt-based composite oxide particles of the present invention and a second lithium compound.

A temperature required to sinter the lithium-cobalt-based composite oxide particles of the present invention is 900°C or higher, but the lithium-cobalt-based composite oxide particle composition of the present invention containing a second lithium compound by mixing can be sintered at a temperature lower than 900°C, that is, at 700 to 900°C.

A known method for producing an all-solid-state battery used in most cases is, for example, a method in which a positive electrode layer, a solid electrolyte layer, and a negative electrode layer are formed by turning their respective powder materials into pastes and coating and drying them to prepare green sheets, laminating these green sheets, and subjecting the thus produced laminate to a sintering step in which the green sheets are fired at the same time at a temperature of 700 to 1100°C, preferably 900°C or lower to sinter them (see, for example, paragraphs 0017 to 0022 in Japanese Patent Laid-Open No. 2015-220099, paragraphs 0017 to 0022 in Japanese Patent Laid-Open No. 2015-220116, paragraphs 0088 to 0106 in WO2019/181909).

At this time, the positive electrode layer needs to be formed of a dense positive electrode active material to improve lithium-ion conductivity. Therefore, there is demand for a positive electrode active material whose primary particles are fine and which can easily be sintered at 900°C or lower.

The lithium-cobalt-based composite oxide particle composition of the present invention can be sintered at a low temperature of 900°C or lower, preferably 700 to 900°C, and is therefore particularly useful as a positive electrode active material powder for all-solid-state batteries.

Examples of the second lithium compound used in the lithium cobalt-based composite oxide particle composition of the present invention include lithium carbonate, lithium hydroxide, and lithium nitrate. The compound species of the second lithium compound may be the same or different from that of the first lithium compound. For example, when lithium carbonate is used as a first lithium compound, lithium carbonate or a lithium compound other than lithium carbonate may be used as a second lithium compound. The second lithium compound is preferably lithium carbonate, lithium hydroxide, or lithium nitrate.

The average primary particle diameter of the second lithium compound determined under observation with a scanning electron microscope (SEM) is 0.10 to 100.0 $\mu$m, preferably 0.10 to 10.0 $\mu$m, more preferably 0.10 to 1.0 $\mu$m. When the second lithium compound is lithium carbonate, the average primary particle diameter of the lithium carbonate as a second lithium compound is preferably 0.10 to 10.0 $\mu$m, more preferably 0.10 to 1.0 $\mu$m. Setting the average particle diameter of primary particles of the second lithium compound to fall within the above range is preferred from the viewpoint that the second lithium compound can easily be dispersed uniformly in the lithium-cobalt-based composite oxide particle composition so that sintering can be achieved at much lower temperature.

The content of the second lithium compound in terms of lithium atom content in the lithium-cobalt-based composite oxide particle composition of the present invention is 0.01 to 10.0 mass%, preferably 0.05 to 5.0 mass% relative to the mass of the lithium-cobalt-based composite oxide particles. Setting the second lithium compound content to fall within the above range is preferred from the viewpoint that sintering can be achieved at much lower temperature.

The lithium-cobalt-based composite oxide particle composition of the present invention is produced by, for example, mixing or mixing and pulverizing lithium-cobalt-based composite oxide particles obtained by performing the above-described method for producing lithium-cobalt-based composite oxide particles of the present invention and a second lithium compound.

A method for producing a lithium-cobalt-based composite oxide particle composition of the present invention includes a mixing step in which lithium-cobalt-based composite oxide particles obtained by performing the method for producing lithium-cobalt-based composite oxide particles of the present invention and a second lithium compound are mixed or mixed and pulverized.

Specifically, the method for producing lithium-cobalt-based composite oxide particle composition of the present invention includes a mixing step in which the lithium-cobalt-based composite oxide particles of the present invention obtained by performing a process including the above-described raw material mixture preparing step and the above-described final firing step and a second lithium compound are subjected to mixing treatment or mixing and pulverizing treatment.

The lithium-cobalt-based composite oxide particles to be subjected to mixing treatment or mixing and pulverizing treatment together with the second lithium compound in the mixing step in the method for producing lithium-cobalt-based composite oxide particle composition of the present invention may be any one of the following 1) to 4):

1) lithium-cobalt-based composite oxide particles obtained by performing the raw material mixture preparing step and the final firing step;
2) lithium-cobalt-based composite oxide particles obtained by performing the raw material mixture preparing step, the preliminary firing step, and the final firing step;
3) lithium-cobalt-based composite oxide particles obtained by performing the raw material mixture preparing step, the final firing step, and the fired product pulverizing treatment step; and
4) lithium-cobalt-based composite oxide particles obtained by performing the raw material mixture preparing step, the preliminary firing step, the final firing step, and the fired product pulverizing treatment step.

The mixing step is a step in which the second lithium compound and the lithium-cobalt-based composite oxide particles of the present invention are subjected to mixing treatment or pulverizing and mixing treatment. The mixing treatment or the pulverizing and mixing treatment in the mixing step includes both of a case where the second lithium compound and the lithium-cobalt-based composite oxide particles of the present invention are simply mixed using a mixing means without pulverizing particles and a case where the second lithium compound and the lithium-cobalt-based composite oxide particles of the present invention are mixed while some or all of particles are pulverized using a mixing means or a pulverizing and mixing means.

In the mixing step, the second lithium compound and the lithium-cobalt-based composite oxide particles of the present invention are mixed so that the content of the second lithium compound in terms of lithium atom content is 0.01 to 10.0 mass%, preferably 0.05 to 5.0 mass% relative to the mass of the lithium-cobalt-based composite oxide particles. Setting the amount of the second lithium compound to be mixed to fall within the above range is preferred from the viewpoint that a sintering reaction can further be promoted so that sintering can be achieved at low temperature.

The average primary particle diameter of the second lithium compound in the mixing step is an average particle diameter determined under observation with a scanning electron microscope (SEM), and is preferably 0.10 to 100.0 $\mu$m, more preferably 0.10 to 10.0 $\mu$m, even more preferably 0.10 to 1.0 $\mu$m. Setting the average primary particle diameter of the second lithium compound in the mixing step to fall within the above range is preferred from the viewpoint that the second lithium compound can easily be dispersed uniformly so that a sintering reaction can further be promoted and sintering can be achieved at low temperature.

When the second lithium compound is at least one selected from among lithium carbonate, lithium hydroxide, and lithium nitrate, the average particle diameter of the second lithium compound is preferably 0.10 to 100.0 $\mu$m. When the second lithium compound is lithium carbonate, the average particle diameter of the second lithium compound is more preferably 0.10 to 10.0 $\mu$m.

In the mixing step, the means for mixing or mixing and pulverizing the lithium-cobalt-based composite oxide particles of the present invention and the second lithium compound may either be dry or wet.

A dry method for performing the mixing treatment or the pulverizing and mixing treatment is not limited as long as a uniform mixture can be obtained, and is, for example, a method using a high-speed mixer, a super mixer, a turbosphere mixer, an EIRICH mixer, a Henschel mixer, a Nauta mixer, a ribbon blender, a V-type mixer, a conical blender, a jet mill, a Cosmomizer, a paint shaker, a bead mill, a ball mill, or the like. It should be noted that in the laboratory, the mixing treatment or the pulverizing and mixing treatment can satisfactorily be performed even by a table mixer. It should be noted that the dry mixing treatment or pulverizing and mixing treatment is not limited to mixing treatment or pulverizing and mixing treatment using such a mechanical means as mentioned above as an example.

A wet method for performing mixing treatment or pulverizing and mixing treatment is, for example, a method using a device such as a ball mill, a stirring machine using a stirring blade, a bead mill, a stirrer, a triple roll mill, a disper mill, a homogenizer, a vibration mill, a sand grind mill, an attritor mill, a powerful stirring machine, or the like. The wet mixing treatment or pulverizing and mixing treatment is not limited to mixing treatment or pulverizing and mixing treatment using such a mechanical means as mentioned above as an example. Further, a slurry obtained after the mixing treatment or the pulverizing and mixing treatment is preferably subjected to spray drying from the viewpoint that a lithium-cobalt-based composite oxide particle composition having excellent reactivity can be obtained in which its individual components are uniformly dispersed.

Examples

Hereinbelow, the present invention will be described in more detail with reference to examples, but the present invention is not limited to these examples.

<Lithium-cobalt composite oxide particles>

(1) Weight loss on heating at 850°C

Weight loss on heating at 850°C was determined by the following formula.

$$\text{Weight loss (\%)} = ((X - Y) / X) \times 100$$

X: The mass (g) of lithium-cobalt-based composite oxide particles before heating at 850°C
Y: The mass (g) of lithium-cobalt-based composite oxide particles heated to 850°C at a temperature rise rate of 100°C/h, maintained at 850°C for 5 hours after reaching 850°C, and then naturally cooled to room temperature.

(2) Specific surface area of lithium-cobalt composite oxide particles

The specific surface area of lithium-cobalt composite oxide particles was determined by a BET method.

(3) Average primary particle diameter of lithium-cobalt composite oxide particles

One hundred primary particles were randomly selected under observation with a scanning electron microscope (SEM), the horizontal Feret's diameter of each of the particles was measured, and the average of horizontal Feret's diameters of the 100 particles was determined as the average primary particle diameter of lithium-cobalt composite oxide particles.

(4) Average secondary particle diameter of lithium-cobalt composite oxide particles

The particle size distribution of lithium-cobalt composite oxide particles was measured by laser diffraction/-scattering using water as a measurement solvent. The volume-based 50% particle diameter (D50) of the obtained particle size distribution was defined as the average particle diameter of secondary particles of a lithium-cobalt composite oxide.

(5) Average particle diameter of cobalt compound in raw material mixture

The particle size distribution of a raw material mixture was measured by laser diffraction/scattering using water as a measurement solvent. The volume-based 50% particle diameter (D50) of the obtained particle size distribution was defined as the average particle diameter of secondary particles of a cobalt compound in the raw material mixture.

(6) Crystal phase

A crystal phase was measured by an X-ray diffractometer (manufactured by Rigaku Corporation, Ultima IV) using Cu-K$\alpha$ rays as a radiation source.

(Examples 1 to 6, Comparative Example 1)

(Raw material mixture preparing step)

Cobalt hydroxide (average primary particle diameter: 0.18 $\mu$m, average secondary particle diameter: 0.20 $\mu$m) and lithium carbonate (average secondary particle diameter: 7.0 $\mu$m) were weighed so that a Li/Co ratio was 1.00 and were then subjected to dry mixing and pulverizing treatment in a commercially-available table mixer to obtain 10.5 g of a raw material mixture whose average secondary particle diameter of cobalt hydroxide was 0.22 $\mu$m.

(Preliminary firing step, Final firing step)

The obtained raw material mixture was preliminarily fired at 300°C for 3 hours, and then the preliminarily fired raw material mixture was cooled to around room temperature (25°C) and subjected to remixing treatment in the table mixer. Then, the resultant was finally fired at a firing temperature shown in Table 1 for 5 hours to obtain lithium-cobalt composite oxide particles. The obtained lithium-cobalt composite oxide particles were subjected to disintegrating treatment in the table mixer for 30 seconds to obtain lithium-cobalt composite oxide particles.

(Fired product pulverizing treatment step)

The obtained lithium-cobalt composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt composite oxide particles. Various physical properties of the obtained lithium-cobalt composite oxide particles are shown in Table 1.

[Table 1]

| | Type of cobalt compound | Average secondary particle diameter of cobalt compound in raw material mixture ($\mu$m) | Preliminary firing temperature (°C) | Final firing temperature (°C) | Various physical pro perties of lithium-cobalt-based composite oxide particles | | | | |
|---|---|---|---|---|---|---|---|---|---|
| | | | | | BET specific surface area (m$^2$/g) | Average primary particle diameter ($\mu$m) | Average secondary particle diameter ($\mu$m) | Crystal phase (XRD) | Weight loss on heating at 850°C (%) |
| Example 1 | Cobalt hydroxide | 0.22 | 300 | 550 | 11.7 | 0.19 | 0.32 | Hexagonal single-phase LCO | 1.2 |
| Example 2 | Cobalt hydroxide | 0.22 | 300 | 600 | 10.2 | 0.19 | 0.29 | Hexagonal single-phase LCO | 0.7 |
| Example 3 | Cobalt hydroxide | 0.22 | 300 | 650 | 9.2 | 0.23 | 0.39 | Hexagonal single-phase LCO | 0.9 |
| Example 4 | Cobalt hydroxide | 0.22 | 300 | 700 | 8.1 | 0.25 | 0.39 | Hexagonal single-phase LCO | 0.3 |
| Example 5 | Cobalt hydroxide | 0.22 | 300 | 750 | 7.4 | 0.26 | 0.46 | Hexagonal single-phase LCO | 0.2 |
| Example 6 | Cobalt hydroxide | 0.22 | 300 | 850 | 4.6 | 0.38 | 0.46 | Hexagonal single-phase LCO | 0.0 |
| Comparative Example 1 | Cobalt hydroxide | 0.22 | 300 | 450 | 13.3 | 0.17 | 0.29 | Mixed phase of low-crystalline hexagonal LCO/ $Co_3O_4$/$Li_2CO_3$ | 3.8 |

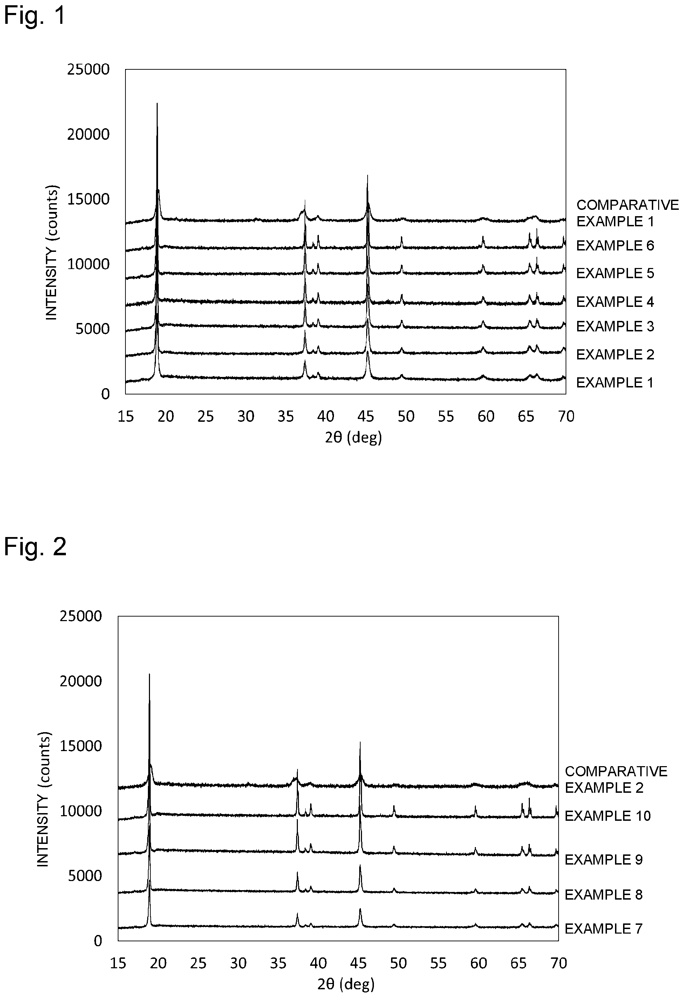

As can be seen from the results shown in Table 1, the lithium-cobalt composite oxide particles obtained in each of Examples had a small average primary particle diameter and showed a weight loss on heating at 850°C of 1.5 mass% or less. Further, Figure 1 confirmed that the crystal phases were hexagonal single phases.

On the other hand, the lithium-cobalt composite oxide particles obtained in Comparative Example 1 had a small average primary particle diameter but showed a large weight loss on heating at 850°C. Further, Figure 1 confirmed that the crystal phase was a mixed phase of low-crystalline hexagonal LCO and tricobalt tetraoxide and lithium carbonate.

(Examples 7 to 10, Comparative Example 2)

(Raw material mixture preparing step)

A raw material mixture was obtained in the same manner as in Example 1.

(Preliminary firing step, Final firing step)

The obtained raw material mixture was preliminarily fired at a preliminary firing temperature shown in Table 2 for 3 hours. After a lapse of preliminary firing time of 3 hours, the temperature was further increased directly to a final firing temperature shown in Table 2 without cooling to perform final firing at a final firing temperature shown in Table 2 for 5 hours. In this way, lithium-cobalt composite oxide particles were obtained. The obtained lithium-cobalt composite oxide particles were subjected to disintegrating treatment in the table mixer for 30 seconds to obtain lithium-cobalt composite oxide particles.

(Fired product pulverizing treatment step)

The obtained lithium-cobalt composite oxide particles were subjected to jet pulverizing treatment in the same manner as in Example 1 to obtain lithium-cobalt composite oxide particles. Various physical properties of the obtained lithium-cobalt composite oxide particles are shown in Table 2.

[Table 2]

| | Type of cobalt compound | Average secondary particle diameter of cobalt compound in raw material ($\mu$m) | Preliminary firing temperature (°C) | Final firing temperature (°C) | Various physical properties of lithium-cobalt-based composite oxide particles | | | | |
|---|---|---|---|---|---|---|---|---|---|
| | | | | | BET specific surface area (m$^2$/g) | Average primary particle diameter ($\mu$m) | Average secondary particle diameter ($\mu$m) | Crystal phase (XRD) | Weight loss on heating at 850°C (%) |
| Example 7 | Cobalt hydroxide | 0.22 | 300 | 650 | 9.6 | 0.20 | 0.42 | Hexagonal single-phase LCO | 0.8 |
| Example 8 | Cobalt hydroxide | 0.22 | 300 | 700 | 7.5 | 0.20 | 0.39 | Hexagonal single-phase LCO | 0.5 |
| Example 9 | Cobalt hydroxide | 0.22 | 300 | 750 | 5.4 | 0.24 | 0.45 | Hexagonal single-phase LCO | 0.1 |
| Example 10 | Cobalt hydroxide | 0.22 | 300 | 850 | 3.0 | 0.50 | 0.90 | Hexagonal single-phase LCO | 0.0 |
| Comparative Example 2 | Cobalt hydroxide | 0.22 | 300 | 450 | 14.2 | 0.16 | 0.38 | Mixed phase of low-crystalline hexagonal LCO/ $Co_3O_4$/$Li_2CO_3$ | 4.9 |

As can be seen from the results shown in Table 2, the lithium-cobalt composite oxide particles obtained in each of Examples had a small average primary particle diameter and showed a weight loss on heating at 850°C of 1.5 mass% or less. Further, Figure 2 confirmed that the crystal phases were hexagonal single phases.

On the other hand, the lithium-cobalt composite oxide particles obtained in Comparative Example 2 had a small average primary particle diameter but showed a large weight loss on heating at 850°C. Further, Figure 2 confirmed that the crystal phase was a mixed phase of low-crystalline hexagonal LCO and tricobalt tetraoxide and lithium carbonate.

(Comparative Examples 3 to 8)

(Raw material mixture preparing step)

Tricobalt tetraoxide (average primary particle diameter: 0.58 $\mu$m, CV value of particle diameter of primary particles: 0.75, average secondary particle diameter: 2.5 $\mu$m) and lithium carbonate (average secondary particle diameter: 7.0 $\mu$m) were weighed so that a Li/Co ratio was 1.00 and were then subjected to dry mixing and pulverizing treatment in a commercially-available table mixer to obtain 10.5 g of a raw material mixture whose average secondary particle diameter of tricobalt tetraoxide was 1.7 $\mu$m. It should be noted that the CV value is an index of particle diameter variation and was calculated on the basis of the formula "CV value = standard deviation of particle diameter / average particle diameter".

(Preliminary firing step, Final firing step)

The obtained raw material mixture was preliminarily fired at a preliminary firing temperature shown in Table 3 for 3 hours. After a lapse of preliminary firing time of 3 hours, the temperature was further increased directly to a final firing temperature shown in Table 3 without cooling to perform final firing at a final firing temperature shown in Table 3 for 5 hours. In this way, lithium-cobalt composite oxide particles were obtained. The obtained lithium-cobalt composite oxide particles were subjected to disintegrating treatment in the table mixer for 30 seconds to obtain lithium-cobalt composite oxide particles.

(Fired product pulverizing treatment step)

The obtained lithium-cobalt composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt composite oxide fine particles. Various physical properties of the obtained lithium-cobalt composite oxide particles are shown in Table 3.

[Table 3]

Various physical properties of lithium-cobalt-based composite oxide particles

| | Type of cobalt compound | Average secondary particle diameter of cobalt compound in raw material (μm) | Preliminary firing temperature (°C) | Final firing temperature (°C) | BET specific surface area (m²/g) | Average primary particle diameter (μm) | Average secondary particle diameter (μm) | Crystal phase (XRD) | Weight loss on heating at 850°C (%) |
|---|---|---|---|---|---|---|---|---|---|
| Comparative Example 3 | Tricobalt tetraoxide | 1.7 | 300 | 550 | 1.4 | 0.95 | 2.58 | Mixed phase of hexagonal LCO/cubic LCO | 0.8 |
| Comparative Example 4 | Tricobalt tetraoxide | 1.7 | 300 | 600 | 1.4 | 0.93 | 2.39 | Mixed phase of hexagonal LCO/cubic LCO | 0.1 |
| Comparative Example 5 | Tricobalt tetraoxide | 1.7 | 300 | 650 | 1.4 | 0.93 | 2.31 | Mixed phase of hexagonal LCO/cubic LCO | 0.2 |
| Comparative Example 6 | Tricobalt tetraoxide | 1.7 | 300 | 700 | 1.3 | 1.03 | 2.29 | Mixed phase of hexagonal LCO/cubic LCO | 0.1 |
| Comparative Example 7 | Tricobalt tetraoxide | 1.7 | 300 | 750 | 1.3 | 1.11 | 2.55 | Hexagonal single-phase LCO | 0.1 |
| Comparative Example 8 | Tricobalt tetraoxide | 1.7 | 300 | 850 | 1.1 | 2.54 | 3.38 | Hexagonal single-phase LCO | 0.0 |

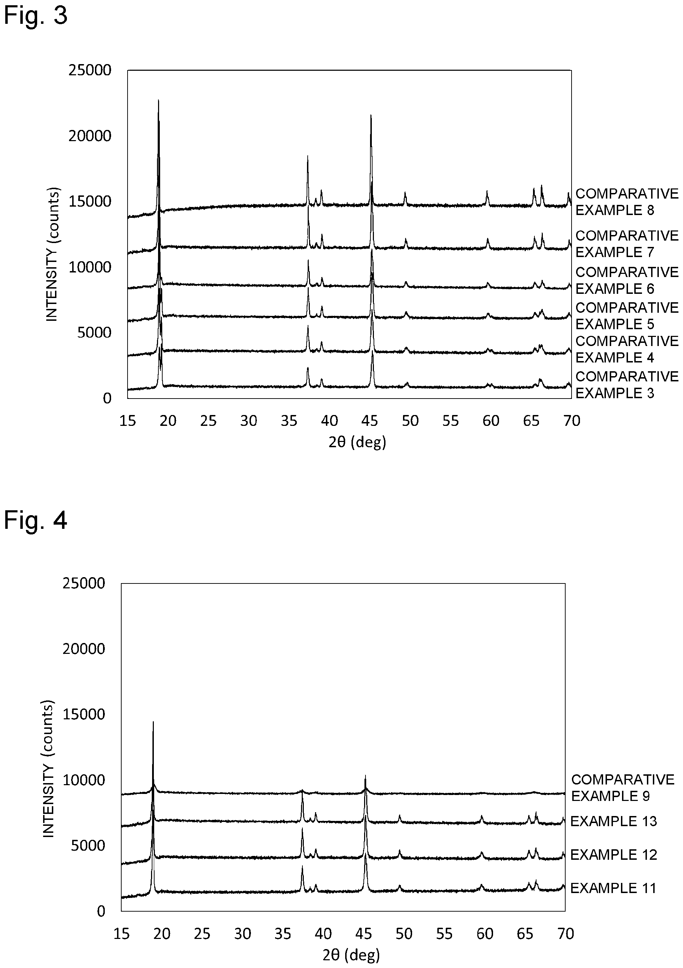

As can be seen from the results shown in Table 3, when the average secondary particle diameter of tricobalt tetraoxide in the raw material mixture is large, lithium-cobalt composite oxide particles having a large average primary particle diameter are obtained. Further, Figure 3 confirmed that a hexagonal single crystal phase could not be obtained unless the firing temperature was increased.

(Examples 11 to 13, Comparative Example 9)

(Raw material mixture preparing step)

Cobalt hydroxide (average primary particle diameter: 0.22 $\mu$m, average secondary particle diameter: 70 $\mu$m) and lithium carbonate (average secondary particle diameter: 7.0 $\mu$m) were weighed so that a Li/Co ratio was 1.00 and were then mixed together with pure water so that a slurry concentration was 20 mass%. The resultant was subjected to wet mixing and pulverizing treatment in a bead mill (manufactured by Ashizawa Finetech Ltd., LMZ22) using $\phi$ 0.5 mm Zr balls to obtain a raw material mixture slurry whose average secondary particle diameter of cobalt hydroxide was 0.21 $\mu$m.
The obtained raw material mixture slurry was spraydried at a feed rate of 60 g/min with the use of a spray drier (manufactured by OHKAWARA KAKOHKI CO., LTD., L-8) whose inlet temperature was set to 250°C and outlet temperature was set to 120°C to obtain 10.5 g of a dry powder of raw material mixture.

(Preliminary firing step, Final firing step)

The obtained dry powder of the raw material mixture was preliminarily fired at a preliminary firing temperature shown in Table 4 for 3 hours. After a lapse of a preliminary firing time of 3 hours, the temperature was further increased directly to a final firing temperature shown in Table 4 without cooling to perform final firing at a final firing temperature shown in Table 4 for 5 hours. In this way, lithium-cobalt composite oxide particles were obtained. The obtained lithium-cobalt composite oxide particles were subjected to disintegrating treatment in a table mixer for 30 seconds to obtain lithium-cobalt composite oxide particles.

(Fired product pulverizing treatment step)

The obtained lithium-cobalt composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt composite oxide particles. Various physical properties of the obtained lithium-cobalt composite oxide particles are shown in Table 4.

[Table 4]

Various physical properties of lithium-cobalt-based composite oxide particles

| | Type of cobalt compound | Average secondary particle diameter of cobalt compound in raw material (μm) | Preliminary firing temperature (°C) | Final firing temperature (°C) | BET specific surface area (m²/g) | Average primary particle diameter (μm) | Average secondary particle diameter (μm) | Crystal phase (XRD) | Weight loss on heating at 850°C (%) |
|---|---|---|---|---|---|---|---|---|---|
| Example 11 | Cobalt hydroxide | 0.21 | 300 | 650 | 11.0 | 0.19 | 0.41 | Hexagonal single-phase LCO | 0.8 |
| Example 12 | Cobalt hydroxide | 0.21 | 300 | 700 | 9.4 | 0.19 | 0.39 | Hexagonal single-phase LCO | 0.5 |
| Example 13 | Cobalt hydroxide | 0.21 | 300 | 750 | 7.9 | 0.21 | 0.69 | Hexagonal single-phase LCO | 0.4 |
| Comparative Example 9 | Cobalt hydroxide | 0.2 | 300 | 450 | 15.3 | 0.16 | 0.34 | Low-crystalline hexagonal single-phase LCO | 1.6 |

As can be seen from the results shown in Table 4, the lithium-cobalt composite oxide particles obtained in each of Examples had a small average primary particle diameter and showed a weight loss on heating at 850°C of 1.5 mass% or less. Further, Figure 4 confirmed that the crystal phases were hexagonal single phases.

On the other hand, the lithium-cobalt composite oxide particles obtained in Comparative Example 9 had a small average primary particle diameter but showed a large weight loss on heating at 850°C. Further, Figure 4 confirmed that it was difficult to judge the crystal phase as being hexagonal due to very low crystallinity.

(Examples 14 to 17)

(Raw material mixture preparing step)

Tricobalt tetraoxide (average primary particle diameter: 0.58 $\mu$m, CV value of primary particle diameter: 0.75, average secondary particle diameter: 2.5 $\mu$m) and lithium carbonate (average secondary particle diameter: 7.0 $\mu$m) were weighed so that a Li/Co ratio was 1.00 and were then mixed together with pure water so that a slurry concentration was 20 mass%. The resultant was subjected to wet mixing and pulverizing treatment in a bead mill (manufactured by Ashizawa Finetech Ltd., LMZ22) using $\phi$ 0.5 mm Zr balls to obtain a raw material mixture slurry whose average secondary particle diameter of tricobalt tetraoxide was 0.21 $\mu$m.

The obtained raw material mixture slurry was spray-dried at a feed rate of 60 g/min with the use of a spray drier (manufactured by OHKAWARA KAKOHKI CO., LTD., L-8) whose inlet temperature was set to 250°C and outlet temperature was set to 120°C to obtain 10.5 g of a dry powder of raw material mixture.

(Preliminary firing step, Final firing step)

The obtained dry powder of raw material mixture was preliminarily fired at a preliminary firing temperature shown in Table 5 for 3 hours. After a lapse of preliminary firing time of 3 hours, the temperature was further increased directly to a final firing temperature shown in Table 5 without cooling to perform final firing at a final firing temperature shown in Table 5 for 5 hours. In this way, lithium-cobalt composite oxide particles were obtained. The obtained lithium-cobalt composite oxide particles were subjected to disintegrating treatment in a table mixer for 30 seconds to obtain lithium-cobalt composite oxide particles.

(Fired product pulverizing treatment step)

The obtained lithium-cobalt composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt composite oxide particles. Various physical properties of the obtained lithium-cobalt composite oxide particles are shown in Table 5.

[Table 5]

| | Type of cobalt compound | Average secondary particle diameter of cobalt compound in raw material mixture ($\mu$m) | Preliminary firing temperature (°C) | Final firing temperature (°C) | Various physical properties of lithium-cobalt-based composite oxide particles | | | | |
|---|---|---|---|---|---|---|---|---|---|
| | | | | | BET specific surface area ($m^2$/g) | Average primary particle diameter ($\mu$m) | Average secondary particle diameter ($\mu$m) | Crystal phase (XRD) | Weight loss on heating at 850°C (%) |
| Example 14 | Tricobalt tetraoxide | 0.21 | 300 | 650 | 7.9 | 0.22 | 0.43 | Hexagonal single-phase LCO | 0.0 |
| Example 15 | Tricobalt tetraoxide | 0.21 | 300 | 700 | 7.2 | 0.24 | 0.35 | Hexagonal single-phase LCO | 0.0 |

(continued)

| | Type of cobalt compound | Average secondary particle diameter of cobalt compound in raw material mixture ($\mu$m) | Preliminary firing temperature (°C) | Final firing temperature (°C) | Various physical properties of lithium-cobalt-based composite oxide particles | | | | |
|---|---|---|---|---|---|---|---|---|---|
| | | | | | BET specific surface area ($m^2$/g) | Average primary particle diameter ($\mu$m) | Average secondary particle diameter ($\mu$m) | Crystal phase (XRD) | Weight loss on heating at 850°C (%) |
| Example 16 | Tricobalt tetraoxide | 0.21 | 300 | 750 | 6.1 | 0.25 | 0.41 | Hexagonal single-phase LCO | 0.0 |
| Example 17 | Tricobalt tetraoxide | 0.21 | 300 | 850 | 4.0 | 0.34 | 0.46 | Hexagonal single-phase LCO | 0.0 |

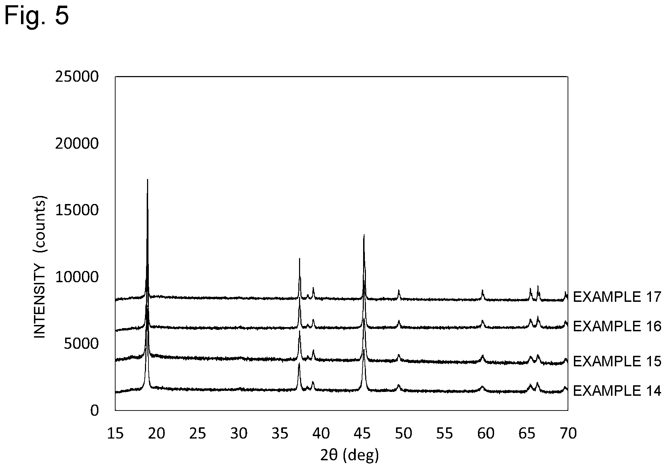

As can be seen from the results shown in Table 5, the lithium-cobalt composite oxide particles obtained in each of Examples had a small average primary particle diameter and showed a weight loss on heating at 850°C of 1.5 mass% or less. Further, Figure 5 confirmed that the crystal phases were hexagonal single phases.

<Lithium-cobalt composite oxide particle composition>

(1) Average primary particle diameter of lithium carbonate as raw material

One hundred primary particles were randomly selected under observation with a scanning electron microscope (SEM), the horizontal Feret's diameter of each of the particles was measured, and the average of horizontal Feret's diameters of the 100 particles was determined as the average primary particle diameter of lithium carbonate.

(2) Sintering test

First, 0.5 g of lithium-cobalt composite oxide particles or 0.5 g of lithium-cobalt composite oxide particle composition obtained by mixing lithium-cobalt composite oxide particles and a second lithium compound were/was pressed into a $\phi$ 15 mm circular thin plate at a pressure of 5 kN/cm$^2$ to obtain a compact. The obtained compact was fired at 700°C or 800°C for 5 hours to obtain a sintered body. The volume density of the sintered body was calculated from the weight, thickness, and diameter of the sintered body by the following formula:

Volume density (g/cm$^3$) of sintered body = weight of sintered body / ((diameter of sintered body $\times$ 0.5)$^2$ $\times$ $\pi$ $\times$ thickness of sintered body)

Further, a sintered body was obtained separately by firing at 900°C for 5 hours to determine an increase or decrease from the volume density of the sintered body at 800°C to confirm a sintering temperature.

(Example 18)

(Raw material mixture preparing step, Preliminary firing step, Final firing step, Fired product pulverizing treatment step)

Lithium-cobalt composite oxide particles were obtained in the same manner as in Example 4.

(Mixing step)

The obtained lithium-cobalt composite oxide particles and lithium carbonate (average primary particle diameter: 7.0 $\mu$m) were weighed so that the content of the lithium carbonate in terms of lithium atom content was 2.0 mass% relative to the mass of the lithium-cobalt-based composite oxide particles and were then subjected to dry mixing and pulverizing treatment in a table mixer to obtain a lithium-cobalt composite oxide particle composition.

(Sintering test)

The sintering test was performed using the lithium-cobalt composite oxide particle composition obtained in Example 18 to calculate the volume densities of sintered bodies. The results are shown in Table 6. Further, there was little change in volume density between the sintered body at 800°C and the sintered body at 900°C, and therefore the sintering temperature was confirmed to be 800°C.

(Example 19)

(Raw material mixture preparing step, Preliminary firing step, Final firing step, Fired product pulverizing treatment step)

Lithium-cobalt composite oxide particles were obtained in the same manner as in Example 4.

(Pulverization of lithium carbonate)

Pure water was added to lithium carbonate (average primary particle diameter: 7.0 $\mu$m) to obtain a slurry with a concentration of 20 mass%, the slurry was subjected to wet mixing and pulverizing treatment in a bead mill (manufactured by Ashizawa Finetech Ltd., LMZ22) using $\phi$ 0.5 mm Zr balls to obtain a lithium carbonate slurry. The obtained lithium carbonate slurry was spray-dried at a feed rate of 60 g/min with the use of a spray drier (manufactured by OHKAWARA KAKOHKI CO., LTD., L-8) whose inlet temperature was set to 250°C and outlet temperature was set to 120°C, and was then subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium carbonate particles having an average primary particle diameter of 0.48 $\mu$m.

(Mixing step)

The obtained lithium carbonate (average primary particle diameter: 0.48 $\mu$m) and the obtained lithium-cobalt composite oxide particles were weighed so that the content of the lithium carbonate in terms of lithium atom content was 2.0 mass% relative to the mass of the lithium-cobalt-based composite oxide particles and were then subjected to dry mixing and pulverizing treatment in a table mixer to obtain a lithium-cobalt composite oxide particle composition.

(Sintering test)

The sintering test was performed using the lithium-cobalt composite oxide particle composition obtained in Example 19 to calculate the volume densities of sintered bodies. The results are shown in Table 6. Further, there was little change in volume density between the sintered body at 800°C and the sintered body at 900°C, and therefore the sintering temperature was confirmed to be 800°C.

(Example 20)

(Raw material mixture preparing step, Preliminary firing step, Final firing step, Fired product pulverizing treatment step)

Lithium-cobalt composite oxide particles were obtained in the same manner as in Example 4.

(Pulverization of lithium carbonate)

Pure water was added to lithium carbonate (average primary particle diameter: 7.0 $\mu$m) to obtain a slurry with a concentration of 20 mass%, the slurry was subjected to wet mixing and pulverizing treatment in a bead mill (manufactured by Ashizawa Finetech Ltd., LMZ22) using $\phi$ 0.5 mm Zr balls to obtain a lithium carbonate slurry having an average primary particle diameter of 0.36 $\mu$m.

(Mixing step)

The obtained lithium carbonate slurry, the obtained lithium-cobalt composite oxide particles, and pure water were mixed so that the content of lithium carbonate in the solid content in terms of lithium atom content was 2.0 mass% relative to the mass of the lithium cobalt-based composite oxide particles and that a slurry concentration was 20 mass%, and then the resultant was spray-dried at a feed rate of 60 g/min with the use of a spray drier (manufactured by OHKAWARA KAKOHKI CO., LTD., L-8) whose inlet temperature was set to 250°C and outlet temperature was set to 120°C to obtain a dry powder of mixture. The obtained dry powder was subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain a lithium-cobalt composite oxide particle composition.

(Sintering test)

The sintering test was performed using the lithium-cobalt composite oxide particle composition obtained in Example 20 to calculate the volume densities of sintered bodies. The results are shown in Table 6. Further, there was little change in volume density between the sintered body at 800°C and the sintered body at 900°C, and therefore the sintering temperature was confirmed to be 800°C.

(Example 21)

(Raw material mixture preparing step, Preliminary firing step, Final firing step, Fired product pulverizing treatment step)

Lithium-cobalt composite oxide particles were obtained in the same manner as in Example 4.

(Mixing step)

The obtained lithium-cobalt composite oxide particles and lithium carbonate (average primary particle diameter: 7.0 $\mu$m) were weighed so that the content of the lithium carbonate in terms of lithium atom content was 0.50 mass% relative to the mass of the lithium-cobalt-based composite oxide particles and were then subjected to dry mixing and pulverizing treatment in a table mixer to obtain a lithium-cobalt composite oxide particles.

(Sintering test)

The sintering test was performed using the lithium-cobalt composite oxide particle composition obtained in Example 21 to calculate the volume densities of sintered bodies. The results are shown in Table 6.

(Example 22)

(Raw material mixture preparing step, Preliminary firing step, Final firing step, Fired product pulverizing treatment step)

Lithium-cobalt composite oxide particles were obtained in the same manner as in Example 4.

(Adding and mixing method)

The obtained lithium-cobalt composite oxide particles and lithium hydroxide (average primary particle diameter: 25.0 $\mu$m) were weighed so that the content of the lithium hydroxide in terms of lithium atom content was 0.50 mass% relative to the mass of the lithium-cobalt-based composite oxide particles and were then subjected to dry mixing and pulverizing treatment in a table mixer to obtain a lithium-cobalt composite oxide particle composition.

(Sintering test)

The sintering test was performed using the lithium-cobalt composite oxide particle composition obtained in Example 22 to calculate the volume densities of sintered bodies. The results are shown in Table 6.

(Example 23)

(Raw material mixture preparing step, Preliminary firing step, Final firing step, Fired product pulverizing treatment step)

Lithium-cobalt composite oxide particles were obtained in the same manner as in Example 4.

(Adding and mixing method)

The obtained lithium-cobalt composite oxide particles and lithium nitrate (average primary particle diameter: 65 $\mu$m) were weighed so that the content of the lithium nitrate in terms of lithium atom content was 0.50 mass% relative to the mass of the lithium-cobalt-based composite oxide particles and were then subjected to dry mixing and pulverizing treatment in a table mixer to obtain a lithium-cobalt composite oxide particle composition.

(Sintering test)

The sintering test was performed using the lithium-cobalt composite oxide particle composition obtained in Example 23 to calculate the volume densities of sintered bodies. The results are shown in Table 6.
The relative density shown in Table 6 is a relative value determined by taking the theoretical density (5.1 g/cm$^3$) of the lithium-cobalt composite oxide particle composition as 100%.

[Table 6]

| | Lithium-cobalt-based composite oxide particle composition | Type of lithium compound added and mixed | Density of sintered body (g/cm$^3$) | | | Relative density (%) | | |
|---|---|---|---|---|---|---|---|---|
| | | | Before sintering | 700°C | 800°C | Before sintering | 700°C | 800°C |
| Example 4 | Fine particulate LCO alone | - | 2.39 | 2.46 | 2.83 | 47.0 | 48.3 | 55.6 |
| Example 18 | Simple dry addition of Li carbonate (2.0 mass%) | Lithium carbonate | 2.33 | 3.54 | 4.08 | 45.7 | 69.4 | 80.1 |
| Example 19 | Dry mixing with Li carbonate finely pulverized by bead mill | Lithium carbonate | 2.16 | 3.81 | 4.30 | 42.3 | 74.7 | 84.2 |
| Example 20 | Wet mixing with Li carbonate subjected to bead milling | Lithium carbonate | 2.20 | 3.76 | 4.45 | 43.2 | 73.7 | 87.2 |
| Example 21 | Simple dry addition of Li carbonate (0.50 mass%) | Lithium carbonate | 2.28 | 3.45 | 4.38 | 44.6 | 67.7 | 86.0 |
| Example 22 | Simple dry addition of Li hydroxide (0.50 mass%) | Lithium hydroxide | 2.40 | 3.34 | 4.39 | 47.0 | 65.5 | 86.1 |
| Example 23 | Simple dry addition of Li nitrate (0.50 mass%) | Lithium nitrate | 2.48 | 3.17 | 4.16 | 48.6 | 62.2 | 81.6 |

As can be seen from the results shown in Table 6, the sintered bodies obtained by firing the lithium-cobalt composite oxide particle compositions obtained by mixing lithium carbonate in Examples 18 to 20 at 700°C were higher in volume density than the sintered body obtained by firing the lithium-cobalt composite oxide particles obtained in Example 4 at 700°C. Further, the sintered bodies obtained by firing the lithium-cobalt composite oxide particle compositions obtained by mixing lithium carbonate in Examples 18 to 20 at 800°C were higher in volume density than the sintered body obtained by firing the lithium-cobalt composite oxide particles obtained in Example 4 at 800°C. Comparison between the lithium-cobalt composite oxide particle compositions and the lithium-cobalt composite oxide particles confirmed that when the former was fired at 700°C or 800°C, a sintering reaction further proceeded and sinterability was improved. Further, there was little difference between the volume densities of the lithium-cobalt composite oxide particle compositions at 900°C and the volume densities of the lithium-cobalt composite oxide particle compositions at 800°C, which confirmed that sintering could be achieved at a low temperature of about 800°C.

Further, as can be seen from the results shown in Table 6, the sintered body obtained by firing the lithium-cobalt composite oxide particle composition obtained by mixing lithium carbonate in Example 21 at 700°C, the sintered body obtained by firing the lithium-cobalt composite oxide particle composition obtained by mixing lithium hydroxide in Example 22 at 700°C, and the sintered body obtained by firing the lithium-cobalt composite oxide particle composition obtained by mixing lithium nitrate in Example 23 at 700°C were all higher in volume density than the sintered body obtained by firing the lithium-cobalt composite oxide particles obtained in Example 4 at 700°C.

## Claims

1. Lithium-cobalt-based composite oxide particles formed of a lithium-cobalt-based composite oxide having an average primary particle diameter of 0.50 $\mu$m or less,
the lithium-cobalt-based composite oxide particles showing a weight loss on heating at 850°C of 1.5 mass% or less.

2. The lithium-cobalt-based composite oxide particles according to claim 1, wherein the composite oxide particles have a BET specific surface area of 2.0 $m^2$/g or more.

3. The lithium-cobalt-based composite oxide particles according to claim 1 or 2, wherein the composite oxide has an average secondary particle diameter of 0.10 to 2.00 $\mu$m.

4. The lithium-cobalt-based composite oxide particles according to claim 1 or 2, wherein in X-ray diffraction analysis, an impurity phase other than a hexagonal crystal phase (R-3m) derived from the lithium-cobalt-based composite oxide does not appear.

5. The lithium-cobalt-based composite oxide particles according to claim 1 or 2, wherein the composite oxide particles are obtained by a solid-phase process.

6. A method for producing lithium-cobalt-based composite oxide particles, the method comprising:

   a raw material mixture preparing step in which a raw material mixture containing at least a cobalt compound having an average secondary particle diameter of 0.10 to 0.50 $\mu$m and a first lithium compound is prepared; and
   a final firing step in which the raw material mixture is fired at 500 to 850°C.

7. The method for producing lithium-cobalt-based composite oxide particles according to claim 6, wherein the cobalt compound is at least one selected from among a hydroxide, an oxide, a carbonate, an oxyhydroxide, a nitrate, a sulfate, and an organic acid salt of cobalt.

8. The method for producing lithium-cobalt-based composite oxide particles according to claim 6 or 7, wherein the first lithium compound is at least one selected from among a carbonate, a hydroxide, an acetate, and a nitrate of lithium.

9. The method for producing lithium-cobalt-based composite oxide particles according to claim 6 or 7, wherein, between the raw material mixture preparing step and the final firing step, a preliminary firing step is performed in which the raw material mixture is preliminarily fired at 200°C or higher and lower than 500°C.

10. The method for producing lithium-cobalt-based composite oxide particles according to claim 9, wherein the final firing step is performed after a preliminarily fired product is cooled after the preliminary firing step.

11. The method for producing lithium-cobalt-based composite oxide particles according to claim 9, wherein the final firing step is performed without cooling a preliminarily fired product after the preliminary firing step.

12. The method for producing lithium-cobalt-based composite oxide particles according to claim 6 or 7, wherein after the final firing step, a fired product pulverizing treatment step is performed in which lithium-cobalt-based composite oxide particles obtained by performing the final firing step are subjected to pulverizing treatment.

13. The method for producing lithium-cobalt-based composite oxide particles according to claim 12, wherein in the fired product pulverizing treatment step, the lithium-cobalt-based composite oxide particles are pulverized by jet pulverization.

14. A lithium-cobalt-based composite oxide particle composition containing the lithium-cobalt-based composite oxide particles according to claim 1 or 2 and a second lithium compound.

15. A method for producing a lithium-cobalt-based composite oxide particle composition, the method comprising a mixing step in which lithium-cobalt-based composite oxide particles obtained by performing the method for producing lithium-cobalt-based composite oxide particles according to any one of claims 6 to 13 and a second lithium compound are mixed or mixed and pulverized.

16. The method for producing a lithium-cobalt-based composite oxide particle composition according to claim 15, wherein the second lithium compound is at least one selected from among lithium carbonate, lithium hydroxide, and lithium nitrate.

17. The method for producing a lithium-cobalt-based composite oxide particle composition according to claim 15 or 16, wherein the second lithium compound has an average primary particle diameter of 0.10 to 100.0 $\mu$m.

18. The method for producing a lithium-cobalt-based composite oxide particle composition according to claim 15, wherein the second lithium compound is lithium carbonate having an average primary particle diameter of 0.10 to 10.0 $\mu$m.

19. The method for producing a lithium-cobalt-based composite oxide particle composition according to claim 15, wherein in the mixing step, the second lithium compound and the lithium-cobalt-based composite oxide particles are mixed so that a content of the second lithium compound in terms of lithium atom content is 0.01 to 10.0 mass% relative to a mass of the lithium-cobalt-based composite oxide particles.

20. The method for producing a lithium-cobalt-based composite oxide particle composition according to claim 15, wherein in the mixing step, mixing treatment or mixing and pulverizing treatment is performed in a dry or wet manner.

EP 4 541 771 A1

## Fig. 1

## Fig. 2

Fig. 3

Fig. 4

Fig. 5

## INTERNATIONAL SEARCH REPORT

| International application No. |
| --- |
| **PCT/JP2023/019354** |

### A. CLASSIFICATION OF SUBJECT MATTER

***C01G 51/00***(2006.01)i; ***H01M 4/525***(2010.01)i
FI: C01G51/00 A; H01M4/525

According to International Patent Classification (IPC) or to both national classification and IPC

### B. FIELDS SEARCHED

Minimum documentation searched (classification system followed by classification symbols)

C01G51/00; H01M4/525

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-105594 A (MITSUBISHI CHEMICALS CORP) 02 June 2011 (2011-06-02) claims 1-8, examples 1-2, fig. 1-2 | 1-2, 4-6, 8, 12-13 |
| Y | | 14-15, 19-20 |
| A | | 3, 7, 9-11, 16-18 |
| X | WO 2014/010448 A1 (SUMITOMO METAL MINING CO., LTD.) 16 January 2014 (2014-01-16) claims 1-10, examples 1-9 | 1, 4-6, 8-11 |
| Y | | 14-15, 19-20 |
| A | | 3, 7, 16-17 |
| Y | WO 2021/145312 A1 (MURATA MANUFACTURING CO., LTD.) 22 July 2021 (2021-07-22) claims 1-13, paragraphs [0053]-[0055] | 14-15, 19-20 |
| Y | WO 2021/145273 A1 (MURATA MANUFACTURING CO., LTD.) 22 July 2021 (2021-07-22) claims 1-11, paragraphs [0042]-[0043], [0053], [0065], [0070]-[0071] | 14-15, 19-20 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 July 2023** | **01 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/019354**

**C. DOCUMENTS CONSIDERED TO BE RELEVANT**

| Category* | Citation of document, with indication, where appropriate, of the relevant passages | Relevant to claim No. |
|---|---|---|
| A | JP 04-033260 A (HITACHI MAXELL LTD) 04 February 1992 (1992-02-04) entire text | 1-20 |

Form PCT/ISA/210 (second sheet) (January 2015)

INTERNATIONAL SEARCH REPORT
Information on patent family members

International application No.

**PCT/JP2023/019354**

| Patent document cited in search report | | | Publication date (day/month/year) | Patent family member(s) | | | Publication date (day/month/year) |
|---|---|---|---|---|---|---|---|
| JP | 2011-105594 | A | 02 June 2011 | (Family: none) | | | |
| WO | 2014/010448 | A1 | 16 January 2014 | US | 2015/0188136 | A1 | |
| | | | | claims 1-10, examples 1-9 | | | |
| | | | | KR | 10-2015-0030232 | A | |
| WO | 2021/145312 | A1 | 22 July 2021 | US | 2022/0336807 | A1 | |
| | | | | claims 1-19, paragraphs [0090]-[0092] | | | |
| | | | | CN | 114946049 | A | |
| | | | | JP | 7306493 | B2 | |
| WO | 2021/145273 | A1 | 22 July 2021 | US | 2022/0336854 | A1 | |
| | | | | claims 1-19, paragraphs [0081]-[0082], [0092], [0105], [0110]-[0111] | | | |
| | | | | CN | 114930595 | A | |
| | | | | JP | 7306492 | B2 | |
| JP | 04-033260 | A | 04 February 1992 | (Family: none) | | | |

Form PCT/ISA/210 (patent family annex) (January 2015)

**EP 4 541 771 A1**

**Patent documents cited in the description**

- JP 2019220468 A
- JP 2008105912 A
- JP 2015220099 A
- JP 2015220116 A
- WO 2019181909 A